# EUROPEAN PATENT SPECIFICATION

(11) **EP 2 011 299 B1**
(45) Date of publication and mention of the grant of the patent: **24.04.2013**
(21) Application number: 06754842.0
(22) Date of filing: 25.04.2006
(51) Int. Cl.: H04L 29/06

(54) **METHOD AND APPARATUSES FOR SECURING COMMUNICATIONS BETWEEN A USER TERMINAL AND A SIP PROXY USING IPSEC SECURITY ASSOCIATION**
VERFAHREN UND VORRICHTUNGEN ZUR SICHERUNG DER KOMMUNIKATION ZWISCHEN EINEM BENUTZERENDGERÄT UND EINEM SIP-PROXY MIT IPSEC-SICHERHEITSASSOZIATION
METHODE ET APPAREILS DE SECURISATION DES COMMUNICATIONS ENTRE UN TERMINAL UTILISATEUR ET UN PROXY SIP UTILISANT UNE ASSOCIATION DE SECURITE IPSEC

(43) Date of publication of application: 07.01.2009
(73) Proprietor: Telefonaktiebolaget L- M Ericsson (publ), 164 83 Stockholm (SE)
(72) Inventor: ARKKO, Jari, FIN-02700 Kauniainen (FI); LINDHOLM, Fredrik, S-125 74 Älvsjö (SE)
(74) Representative: Lind, Robert
(86) International application number: PCT/EP2006/061818
(87) International publication number: WO 2007/121786

(56) References cited:
- "Digital cellular telecommunications system (Phase 2+); Universal Mobile Telecommunications System (UMTS); 3G security; Access security for IP-based services (3GPP TS 33.203 version 7.0.0 Release 7); ETSI TS 133 203" ETSI STANDARDS, EUROPEAN TELECOMMUNICATIONS STANDARDS INSTITUTE, SOPHIA-ANTIPO, FR, vol. 3-SA3, no. V700, December 2005 (2005-12), pages 1-48, XP014032871 ISSN: 0000-0001
- "Digital cellular telecommunications system (Phase 2+); Universal Mobile Telecommunications System, Signalling flows for the IP multimedia call control based on Session Initiation Protocol (SIP) and Session Description Protocol (SDP); Stage 3 (3GPP TS 24.228 version 5.14.0 Release 5); ETSI TS 124 228" ETSI STANDARDS, EUROPEAN TELECOMMUNICATIONS STANDARDS INSTITUTE, SOPHIA-ANTIPO, FR, vol. 3-CN1, no. V5150, December 2005 (2005-12), pages 1-55, XP014032498 ISSN: 0000-0001
- ARKKO ERICSSON V DEVARAPALLI NOKIA RESEARCH CENTER F DUPONT GET/ENST BRETAGNE J: "Using IPsec to Protect Mobile IPv6 Signaling Between Mobile Nodes and Home Agents" IETF STANDARD, INTERNET ENGINEERING TASK FORCE, IETF, CH, June 2004 (2004-06), pages 1-41, XP015009556 ISSN: 0000-0003

## Description

### Field of the Invention

The present invention relates to IP Multimedia Subsystem security and more particularly to a method and apparatus for securing communications between user terminals and SIP proxies.

### Background to the Invention

IP Multimedia services provide a dynamic combination of voice, video, messaging, data etc. within the same session. By growing the number of basic applications and the media which it is possible to combine, the number of services offered to the end users will grow, and the inter-personal communication experience will be enriched. This will lead to a new generation of personalised, rich multimedia communication services, including so-called "combinational IP Multimedia" services which are considered in more detail below.

IP Multimedia Subsystem (IMS) is the technology defined by the Third Generation Partnership Project (3GPP) to provide IP Multimedia services over mobile communication networks (3GPP TS 22.228, TS 23.218, TS 23.228, TS 24.228, TS 24.229, TS 29.228, TS 29.229, TS 29.328 and TS 29.329 Releases 5 to 7. IMS provides key features to enrich the end-user person-to-person communication experience through the use of standardised IMS Service Enablers, which facilitate new rich person-to-person (client-to-client) communication services as well as person-to-content (client-to-server) services over IP-based networks. The IMS makes use of the Session Initiation Protocol (SIP) to set up and control calls or sessions between user terminals (or user terminals and application servers). The Session Description Protocol (SDP), carried by SIP signalling, is used to describe and negotiate the media components of the session. Whilst SIP was created as a user-to-user protocol, IMS allows operators and service providers to control user access to services and to charge users accordingly.

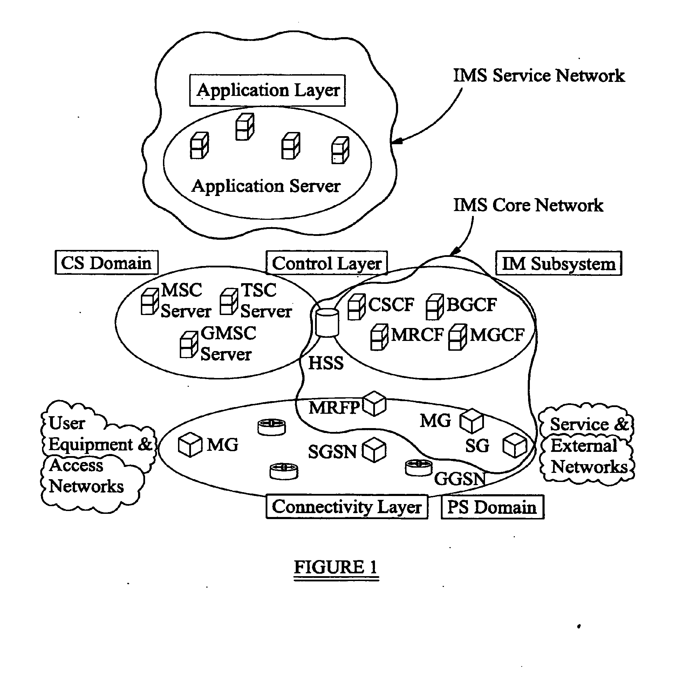

Figure 1 illustrates schematically how the IMS fits into the mobile network architecture in the case of a GPRS/PS access network. Call/Session Control Functions (CSCFs) operate as SIP proxies within the IMS. The 3GPP architecture defines three types of CSCFs: the Proxy CSCF (P-CSCF) which is the first point of contact within the IMS for a SIP terminal; the Serving CSCF (S-CSCF) which provides services to the user that the user is subscribed to; and the Interrogating CSCF (I-CSCF) whose role is to identify the correct S-CSCF and to forward to that S-CSCF a request received from a SIP terminal via a P-CSCF.

A user registers with the IMS using the specified SIP REGISTER method. This is a mechanism for attaching to the IMS and announcing to the IMS the address at which a SIP user identity can be reached. The user receives a unique URI from the S-CSCF that it shall use when it initiates a dialog. In 3GPP, when a SIP terminal performs a registration, the IMS authenticates the user, and allocates a S-CSCF to that user from the set of available S-CSCFs. Whilst the criteria for allocating S-CSCFs is not specified by 3GPP, these may include load sharing and service requirements. It is noted that the allocation of an S-CSCF is key to controlling (and charging for) user access to IMS-based services. Operators may provide a mechanism for preventing direct user-to-user SIP sessions which would otherwise bypass the S-CSCF.

During the registration process, it is the responsibility of the I-CSCF to select an S-CSCF if one is not already selected. The I-CSCF receives the required S-CSCF capabilities from the home network's Home Subscriber Server (HSS), and selects an appropriate S-CSCF based on the received capabilities. [It is noted that S-CSCF allocation is also carried out for a user by the I-CSCF in the case where the user is called by another party, and the user is not currently allocated an S-CSCF.] When a registered user subsequently sends a session request (e.g. SIP INVITE) to the IMS, the request will include the P-CSCF and S-CSCF URIs so that the P-CSCF is able to forward the request to the selected S-CSCF. This applies both on the originating and terminating sides (of the IMS). [For the terminating call the request will include the P-CSCF address and the UE address.]

It is noted that in some cases the first point of contact between the User Equipment (UE) and the SIP "world" may be a Session Controller (SC), including P-CSCF functionality. The SC may have additional functionality to the P-CSCF, but will handle the policing of access for the UE to the visited network.

According to the IMS architecture (3GPP TS 33.203: IMS security specification), communications between the User Equipment (UE) and the first-hop SIP proxy, P-CSCF or SC, is secured (i.e. authenticated and encrypted) by means of IPSec Security Associations (SAs), one SA for each direction. These SAs are relatively short lived, and are derived when required from material that is produced as a side-effect of the Authentication and Key Agreement (AKA) protocol run on registration between the UE and the home network. An IPSec SA is tied to the IP addresses of both ends of the communication (i.e. the UE and the SIP proxy).

The ETSI TS 33.203, V7.0.0 (2005-12) sets out a procedure for establishing Security Associations in the context of the IMS. A re-registration attempt by a user requires an AKA authentication of the user by the user's home network. Associated signalling is protected between the user terminal and the P-CSCF using any pre-existing Security Association.

### Summary of the Present Invention

It has been recognised that, according to current practice, the nature of IPSec will require a renegotiation of the SAs used to secure communications between the UE and the SIP proxy, whenever the IP address of one of these nodes changes (return packets should always be sent to the most up to date IP address). In the case of the UE, the IP address of that node may change, for example, as a result of loss of client state information at a Network Address Translator (NAT) or because the UE is a mobile node (using a 3G access network). In the case of the SIP proxy, the IP address of that node may change, for example, as a result of the UE migrating to a new SIP proxy. Renegotiation of IPSec SAs requires an exchange of messages between the SIP proxy and the home network of the UE, as well as between the SIP proxy and the UE. This will inevitably introduce a significant interruption to the communication path, as well as adding to the volume of signalling traffic within the network and processing load on the home network servers (HSS, AAA and HLR).

It is an object of the present invention to reduce any interruption to communication services resulting from a change in the IP address of either end of the communication link.

According to a first aspect of the present invention there is provided a method of securing communications between a user terminal and a SIP proxy, the method comprising:
performing a full authentication procedure between the user terminal and a first SIP proxy in order to generate at least one IPSec Security Association between the user terminal and the first SIP proxy, this procedure involving an exchange of signalling between the user terminal and a home network of the user terminal; and
in response to a handover of the user terminal from the first SIP proxy to a second SIP proxy, performing a local reauthentication of the user terminal at the second SIP proxy using keying information associated with the at least one IPSec Security Association, the local reauthentication comprising generating a challenge at the second SIP proxy and sending this to the user terminal, generating a response at the user terminal using said challenge and said keying information associated with said at least one IPSec Security Association and sending the response to the second SIP proxy, and authenticating the response at the second SIP proxy using said at least one IPSec Security Association received at the second SIP proxy from the first SIP proxy.

In the case where the user terminal accesses a SIP network via a 3GPP access network, the full authentication procedure between the user terminal and a first SIP proxy may be the IMS AKA procedure.

The first and second SIP proxies may be for example Session Controllers (SCs), or Proxy Call Session Control Functions (P-CSCFs) of an IP Multimedia Subsystem (IMS).

Preferably, the location of a user terminal is defined by an IP address and, optionally, a port number. In the case of a relocation of the user terminal, the new Security Association may he established hy reassigning the security parameters of the pre-existing Security Association to the new IP address of the user terminal. The new IP address of the terminal is sent to the SIP proxy by way of SIP level signalling.

In the case of a handover of the user terminal from a first to a second SIP proxy, the new Security Association may be established by reassigning the security parameters of the pre-existing Security Association to the IP address of the second SIP proxy. The pre-existing Security Association is obtained by the second SIP proxy from the first SIP proxy. This may require that the second SIP proxy send to the first SIP proxy a request for the pre-existing Security Association. The second SIP proxy may obtain the identity of the first SIP proxy from the user terminal via SIP level signalling. Alternatively, the second SIP proxy may obtain this identity from a central node. In another embodiment, a central node may instruct the first SIP proxy to send the pre-existing Security Association to the second SIP proxy.

When the second SIP proxy receives a registration request from the user terminal, this may trigger the second SIP proxy to initiate a challenge and response authentication procedure with the user terminal based upon keying information of the pre-existing Security Association. Only if the user terminal is authenticated is a new Security Association established and used.

According to a second aspect of the present invention there is provided apparatus for providing a SIP proxy and comprising means for establishing at least one Security Association to secure communications between the SIP proxy and a user terminal during a full authentication procedure between the SIP proxy and the user terminal in order to generate the at least one IPSec Security Association, wherein means for performing, in response to a handover of the user terminal from a first SIP proxy to the SIP proxy, a local reauthentication of the user terminal using keying information associated with the at least one IPSec Security Association , the means for performing the local reauthentication is configured to: generate a challenge at the second SIP proxy and sending this to the user terminal, receive a response from the user terminal, wherein the response is generated at the user terminal using said challenge and said keying information, and authenticate the response at the SIP proxy using said at least one IPSec Security Association received at the SIP proxy from the first SIP proxy.

As the apparatus comprises means for reauthenticating the user terminal to the SIP proxy on the basis of a challenge and response process between the user terminal and the SIP proxy using keying information of the pre-existing Security Association. This avoids the need for a full reauthentication procedure involving the home network of the user terminal.

According to a fourth aspect of the present invention there is provided a user terminal arranged in use to communicate with a SIP proxy and comprising:
means for performing a full authentication procedure with a first SIP proxy in order to generate at least one IPSec Security Association between the user terminal and the first SIP proxy, this procedure involving an exchange of signalling between the user terminal and a home network of the user terminal; and
means establishing the at least one IPSec Security Association with the SIP proxy using keying information associated with the at least one IPSec Security Association in response to a handover of the user terminal from the first SIP proxy to the second SIP proxy, and comprising means for generating a response at the user terminal using a challenge generated at the second SIP proxy, and which has been sent to the user terminal from the second SIP proxy, and said keying information associated with the at least one IPSec Security Association and sending the response to the second SIP proxy for use in authenticating the response at the second SIP proxy and communicating with the second SIP proxy using the at least one IPSec Security Association.

### Brief Description of the Drawings

Figure 1 illustrates schematically an IP Multimedia Subsystem on top of a 3GPP access network;
Figure 2 illustrates schematically a generalised service and access network architecture; and
Figure 3 is a signalling flow diagram illustrating signalling associated with a user terminal relocating to a new Session Controller of an access network.

### Detailed Description of Certain Embodiments

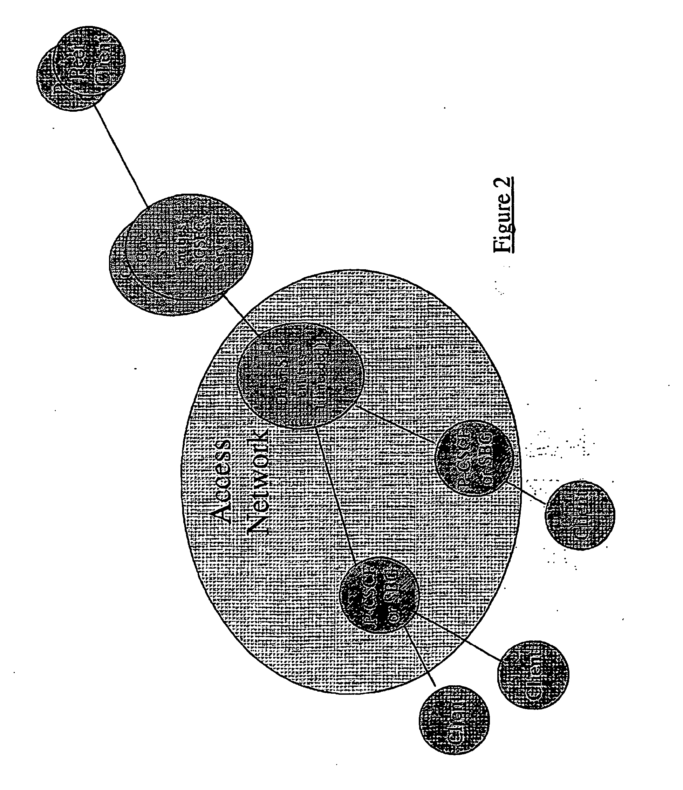

As has already been discussed, Figure 1 illustrates the IP Multimedia Subsystem (IMS) on top of a 3G access network. Figure 2 illustrates a generalised architecture for providing SIP-based services on top of an access network. Clients (or UEs) attach at the SIP level to a first-hop SIP proxy which may be, for example, a P-CSCF or a Session Controller (SC) in the case of IMS.

It is proposed here to provide a means for establishing a new IPSec SA based upon an existing IPSec SA, for securing communications between a user terminal (UE) and the first hop SIP proxy, after the location or identity, as defined by an IP address (and optionally port number), of one of the end nodes has changed. This means involves an exchange of signalling between the UE and the SIP proxy at the SIP level, i.e. using SIP messages. Actual changes in IP addresses are transferred from the lower IP layers to the application layers by an appropriate Application Programming Interface (API). An added advantage of making the IP address changes visible to the application layer is that these changes can be subject to application policies. It also becomes easier to signal details of changes between network nodes. The general solution consists of the following steps:
Step 1. This can be either the user terminal knowing that it has moved to a new IP address, the proxy server seeing that the user terminal's IP address (and port number) has changed (likely due to NAT problems), or the user terminal receiving local information implying that it needs to use a new proxy.
Step 2. Re-authentication of the user terminal to the SIP proxy is based on key material and parameters derived during an initial authentication of the client. The core network SIP servers or authentication servers are not needed for this re-authentication step, and as a result it is fast.
Step 3. Reset of the addresses and/or SAs to their new values at the user terminal and the SIP proxy.
Step 4. In the event that the user terminal has moved to a new SIP proxy, the core network SIP servers are informed of the identity of the new local SIP proxy. This is necessary because otherwise the core network cannot route incoming calls to the right proxy address. This operation is called "network initiated re-registration" in SIP, and in IMS it updates the registration info in the S-CSCF. A network initiated re-registration may also be required to update peer user terminals of changes in the location of a user terminal or a change to the identity of the SIP proxy.

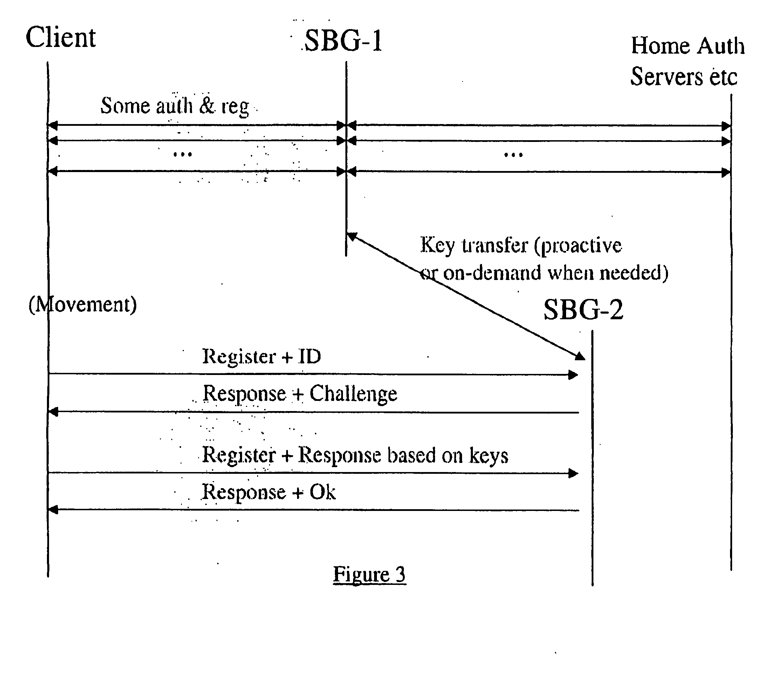

Figure 3 illustrates signalling associated with one particular implementation of this general solution, for the case where the user terminal moves from a first SC (SC-1) to a second SC (SC-2). Upon first attachment to the IMS, the user terminal conducts a standard authentication and registration process with the first SC. This involves running the IMS AKA process with the terminal's home network. As a result, a pair of IPSec SAs are established at both the first SC and the user terminal. These SAs are used to secure subsequent communications between the user terminal and the first SC.

When the user terminal determines that it must transfer to a new SC due (typically as a result of signalling sent to it by the network), the user terminal sends a SIP REGISTER message to the new SC (in this case SC-2). This message contains an identity of the user terminal. Upon receipt of this message, the second SC will generate a challenge and send this to the user terminal. The challenge may be for example a random number. In response, the user terminal generates a further response using the challenge and keying information associated with the pre-exisiting SA (used with SC-1), and sends this to the second SC. By this stage, the second SC has received the pre-exisiting SA from the first SC, and it uses this information to authenticate the response. The second SC returns an OK message to the user terminal, and thereafter communications between the UE and the second SC are secured using the pre-exisiting SA. This process can be based on HTTP Digest MD5.

There are a number of mechanisms which may be used to trigger the sending of SA information from the old to the new SIP proxy. One approach is for a control node within the IMS core network, which has knowledge of or determines the need for a SIP proxy change, to signal to the old SIP proxy the identity of the new SIP proxy and to cause the former to send the relevant SA(s) to the latter. Another approach is to employ bits in the Security Parameter Index (SPI) field associated with IPSec packets so that each SIP proxy has its own "identifier" in a sub-field of the SPI. When a new SIP proxy gets an IPSec packet with an unknown SPI, the new proxy can find the old proxy and download the context associated with the terminal from the old proxy. This context includes, among other things, local registration state and SAs. In the case where ongoing sessions exist, the new SIP proxy may also cause a re-invite to be sent to the peer user terminal(s). The re-invite will notify the peer terminal(s) of the identity of the new SIP proxy. In the case where the user terminal sends the re-invite itself, the SIP proxy may modify the media information in the message so that media traffic is rerouted through the new SC.

A number of additional enhancements to this approach can be introduced, in particular in order to address a possible Denial of Service (DoS) attack where attackers simply choose an SPI at random and send SIP messages containing this SPI to a SIP proxy hoping to create excessive system traffic. If the SPIs are created using some encryption function, e.g. by encrypting a cookie with an operator key (OP_KEY) shared between the different SIP proxies, by decrypting a received SPI, any SIP proxy will be able to authenticate the SIP proxy identity. For example, consider the case where the SIP proxy is a SC:
SPI = E (OP_KEY, NUM),
where
NUM = {SC_ID, SPI_X, CHKSUM},
and OP_KEY is a random secret value, SC_ID is a unique identity of the (old) SC, SPI_X is a random value (unique per user), CHKSUM is a well known value (e.g., a number of zeros or a hash over SC_ID and SPI_X)" and E is some suitable encryption function, e.g. a one-way hashing function. A receiving SC will be able to authenticate the SC-ID by confirming the short check sum (CHKSUM). The receiving SC can then contact the old SC using the authenticated SC_ID to obtain the appropriate SA(s). Security may be further enhanced if the SIP proxy identity SP_ID is a sequence number. Each SIP proxy could broadcast to other SIP proxies the lowest SPI_X used and the highest SPI_Y used, thus overcoming attacks based upon the replay of already used SPIs.

It will be appreciated by the person of skill in the art that various modifications may be made to the above described embodiments without departing from the scope of the present invention. For example, advantage may be taken of NAT/SIP keep alive messages. It could well be that it is a NAT/SIP keepalive message that (a) discovers that the user terminal is in a new location or causes messages to be received from a new client, (b) initiates the fast re-auth or c) itself performs (initiates) the re-authentication process.

## Claims

1. A method of securing communications between a user terminal and a SIP proxy, the method comprising:
performing a full authentication procedure between the user terminal and a first SIP proxy in order to generate at least one IPSec Security Association between the user terminal and the first SIP proxy, this procedure involving an exchange of signalling between the user terminal and a home network of the user terminal;
**characterised by**,
in response to a handover of the user terminal from the first SIP proxy to a second SIP proxy, performing a local reauthentication of the user terminal at the second SIP proxy using keying information associated with the at least one IPSec Security Association, the local reauthentication comprising:
generating a challenge at the second SIP proxy and sending this to the user terminal;
generating a response at the user terminal using said challenge and said keying information associated with said at least one IPSec Security Association and sending the response to the second SIP proxy; and
authenticating the response at the second SIP proxy using said at least one IPSec Security Association received at the second SIP proxy from the first SIP proxy.

2. A method according to claim 1, wherein said full authentication procedure is an LMS AKA procedure.

3. A method according to claim 1 or 2, wherein said first and second SIP proxies are Session Controllers or Proxy Call Session Control Functions of an IP Multimedia Subsystem.

4. A method according to any one of claims 1 to 3, wherein a new Security Association is established by reassigning the security parameters of the at least one IPSec Security Association to the IP address of the second SIP proxy.

5. A method according to claim 4, wherein the at least one IPSec Security Association is obtained by the second SIP proxy from the first SIP proxy.

6. A method according to claim 5, the second SIP proxy sending to the first SIP proxy a request for the at least one IPSec Security Association.

7. A method according to any one of claims 1 to 6, wherein the second SIP proxy obtains the identity of the first SIP proxy from the user terminal via SIP level signalling.

8. A method according to any one of claims 1 to 6, wherein the second SIP proxy obtains the identity of the first SIP proxy from a central node.

9. A method according to claim 5, wherein a central node instructs the first SIP proxy to send the at least one IPSec Security Association to the second SIP proxy.

10. A method according to any one of the preceding claims, wherein, when the second SIP proxy receives a registration request from the user terminal, this triggers the second SIP proxy to initiate a challenge and response authentication procedure with the user terminal based upon keying information of the at least one IPSec Security Association and, only if the user terminal is authenticated, is a new Security Association established and used.

11. Apparatus for implementing a SIP proxy and comprising means for establishing at least one IPSec Security Association to secure communications between the SIP proxy and a user terminal during a full authentication procedure between the SIP proxy and the user terminal in order to generate the at least one IPSec Security Association, **characterised by**
means for performing, in response to a handover of the user terminal from a first SIP proxy to the SIP proxy, a local reauthentication of the user terminal using keying information associated with the at least one IPSec Security Association, wherein the means for performing the local reauthentication is configured to:
generate a challenge at the SIP proxy and sending this to the user terminal;
receive a response from the user terminal, wherein the response is generated at the user terminal using said challenge and said keying information; and
authenticate the response at the SIP proxy using said at least one IPSec Security Association received at the SIP proxy from the first SIP proxy.

12. A user terminal arranged in use to communicate with a second SIP proxy and comprising:
means for performing a full authentication procedure with a first SIP proxy in order to generate at least one IPSec Security Association between the user terminal and the first SIP proxy, this procedure involving an exchange of signalling between the user terminal and a home network of the user terminal;
**characterised by**
means for establishing the at least one IPSec Security Association with the second SIP proxy using keying information associated with the at least one IPSec Security Association in response to a handover of the user terminal from the first SIP proxy to the second SIP proxy, the means for establishing further comprising:
means for generating a response at the user terminal using a challenge generated at the second SIP proxy, and which has been sent to the user terminal from the second SIP proxy, and said keying information associated with the at least one IPSec Security Association; and
means for sending the response to the second SIP proxy for use in authenticating the response at the second SIP proxy and communicating with the second SIP proxy using the at least one IPSec Security Association.

## Patentansprüche

1. Verfahren zum Absichern von Kommunikation zwischen einem Benutzerendgerät und einem SIP-Proxy, wobei das Verfahren umfasst:
Durchführen einer kompletten Authentifizierungsprozedur zwischen dem Benutzerendgerät und einem ersten SIP-Proxy, um mindestens eine IPSec-Sicherheitsverknüpfung zwischen dem Benutzerendgerät und dem ersten SIP-Proxy zu erzeugen, wobei diese Prozedur mit einem Signalisierungsaustausch zwischen dem Benutzerendgerät und einem Heimatnetzwerk des Benutzerendgeräts einhergeht;
**gekennzeichnet durch**:
als Antwort auf eine Verbindungsübergabe des Benutzerendgeräts vom ersten SIP-Proxy zu einem zweiten SIP-Proxy erfolgendes Durchführen einer lokalen Neuauthentifizierung des Benutzerendgeräts beim zweiten SIP-Proxy unter Verwendung von Schlüsselinformation, die mit der mindestens einen IPSec-Sicherheitsverknüpfung verknüpft ist, wobei die lokale Neuauthentifizierung umfasst:
Erzeugen einer Aufgabe im zweiten SIP-Proxy und Senden derselben an das Benutzerendgerät;
Erzeugen einer Antwort im Benutzerendgerät unter Verwendung der Aufgabe und der Schlüsselinformation, die mit der mindestens einen IPSec-Sicherheitsverknüpfung verknüpft ist, und Senden der Antwort an den zweiten SIP-Proxy, und
Authentifizieren der Antwort im zweiten SIP-Proxy unter Verwendung der mindestens einen IPSec-Sicherheitsverknüpfung, die im zweiten SIP-Proxy vom ersten SIP-Proxy empfangen wurde.

2. Verfahren nach Anspruch 1, worin die komplette Authentifizierungsprozedur eine IMS-AKA-Prozedur ist.

3. Verfahren nach Anspruch 1 oder 2, worin der erste und der zweite SIP-Proxy Sitzungssteuerungseinrichtungen oder Proxy-Gesprächssitzungssteuerungsfunktionen eines IP-Multimediasubsystems sind.

4. Verfahren nach einem der Ansprüche 1 bis 3, worin eine neue Sicherheitsverknüpfung durch Neuzuweisung der Sicherheitsparameter der mindestens einen IPSec-Sicherheitsverknüpfung zur IP-Adresse des zweiten SIP-Proxys eingerichtet wird.

5. Verfahren nach Anspruch 4, worin die mindestens eine IPSec-Sicherheitsverknüpfung durch den zweiten SIP-Proxy vom ersten SIP-Proxy erlangt wird.

6. Verfahren nach Anspruch 5, wobei der zweite SIP-Proxy an den ersten SIP-Proxy eine Anfrage nach der mindestens einen IPSec-Sicherheitsverknüpfung sendet.

7. Verfahren nach einem der Ansprüche 1 bis 6, worin der zweite SIP-Proxy die Identität des ersten SIP-Proxys vom Benutzerendgerät mittels Signalisierung auf SIP-Ebene erlangt.

8. Verfahren nach einem der Ansprüche 1 bis 6, worin der zweite SIP-Proxy die Identität des ersten SIP-Proxys von einem zentralen Knoten erlangt.

9. Verfahren nach Anspruch 5, worin ein zentraler Knoten den ersten SIP-Proxy anweist, die mindestens eine IPSec-Sicherheitsverknüpfung an den zweiten SIP-Proxy zu senden.

10. Verfahren nach einem der vorhergehenden Ansprüche, worin, wenn der zweite SIP-Proxy eine Registrierungsanfrage vom Benutzerendgerät empfängt, dies den zweiten SIP-Proxy veranlasst, eine Aufgabe-Antwort-Authentifizierungsprozedur mit dem Benutzerendgerät auszulösen, die auf Schlüsselinformation der mindestens einen IPSec-Sicherheitsverknüpfung beruht, und nur wenn das Benutzerendgerät authentifiziert wird, wird eine neue Sicherheitsverknüpfung eingerichtet und verwendet.

11. Vorrichtung zum Implementieren eines SIP-Proxys und umfassend Mittel zum Einrichten mindestens einer IPSec-Sicherheitsverknüpfung, um Kommunikation zwischen dem SIP-Proxy und einem Benutzerendgerät während einer kompletten Authentifizierungsprozedur zwischen dem SIP-Proxy und dem Benutzerendgerät abzusichern, um die mindestens eine IPSec-Sicherheitsverknüpfung zu erzeugen,
**gekennzeichnet durch**:
Mittel zum als Antwort auf eine Verbindungsübergabe des Benutzerendgeräts von einem ersten SIP-Proxy zu dem SIP-Proxy erfolgenden Durchführen einer lokalen Neuauthentifizierung des Benutzerendgeräts unter Verwendung von Schlüsselinformation, die mit der mindestens einen IPSec-Sicherheitsverknüpfung verknüpft ist, wobei die Mittel zum Durchführen der lokalen Neuauthentifizierung dafür konfiguriert sind:
eine Aufgabe im SIP-Proxy zu erzeugen und dieselbe an das Benutzerendgerät zu senden;
eine Antwort vom Benutzerendgerät zu empfangen, worin die Antwort im Benutzerendgerät unter Verwendung der Aufgabe und der Schlüsselinformation erzeugt wird; und
die Antwort im SIP-Proxy unter Verwendung der mindestens einen IPSec-Sicherheitsverknüpfung, die im SIP-Proxy vom ersten SIP-Proxy empfangen wurde, zu authentifizieren.

12. Benutzerendgerät, dafür eingerichtet, in Gebrauch mit einem zweiten SIP-Proxy zu kommunizieren, und umfassend:
Mittel zum Durchführen einer kompletten Authentifizierungsprozedur mit einem ersten SIP-Proxy, um mindestens eine IPSec-Sicherheitsverknüpfung zwischen dem Benutzerendgerät und dem ersten SIP-Proxy zu erzeugen, wobei diese Prozedur mit einem Signalisierungsaustausch zwischen dem Benutzerendgerät und einem Heimatnetzwerk des Benutzerendgeräts einhergeht;
**gekennzeichnet durch**:
Mittel zum Einrichten der mindestens einen IPSec-Sicherheitsverknüpfung mit einem zweiten SIP-Proxy unter Verwendung von Schlüsselinformation, die mit der mindestens einen IPSec-Sicherheitsverknüpfung verknüpft ist, und zwar als Antwort auf eine Verbindungsübergabe des Benutzerendgeräts vom ersten SIP-Proxy zum zweiten SIP-Proxy, wobei die Mittel zum Einrichten ferner umfassen:
Mittel zum Erzeugen einer Antwort im Benutzerendgerät unter Verwendung einer Aufgabe, die im zweiten SIP-Proxy erzeugt wurde und die vom zweiten SIP-Proxy an das Benutzerendgerät gesendet worden ist, und der Schlüsselinformation, die mit der mindestens einen IPSec-Sicherheitsverknüpfung verknüpft ist; und
Mittel zum Senden der Antwort an den zweiten SIP-Proxy zur Verwendung beim Authentifizieren der Antwort im zweiten SIP-Proxy und Kommunizieren mit dem zweiten SIP-Proxy unter Verwendung der mindestens einen IPSec-Sicherheitsverknüpfung.

## Revendications

1. Procédé de sécurisation des communications entre un terminal utilisateur et un serveur mandataire de protocole SIP, le procédé comprenant :
la mise en oeuvre d'une procédure d'authentification complète entre le terminal utilisateur et un premier serveur mandataire de protocole SIP, en vue de générer au moins une association de sécurité de protocole IPSec entre le terminal utilisateur et le premier serveur mandataire de protocole SIP, cette procédure impliquant un échange de signalisation entre le terminal utilisateur et un réseau domestique du terminal utilisateur ;
**caractérisé par** :
en réponse à un transfert intercellulaire du terminal utilisateur, du premier serveur mandataire de protocole SIP à un second serveur mandataire de protocole SIP, la mise en oeuvre d'une réauthentification locale du terminal utilisateur au niveau du second serveur mandataire de protocole SIP, en utilisant des informations de clés associées à ladite au moins une association de sécurité de protocole IPSec, la réauthentification locale comprenant :
la génération d'une tâche au niveau du second serveur mandataire de protocole SIP et l'envoi de cette tâche au terminal utilisateur ;
la génération d'une réponse, au niveau du terminal utilisateur, en utilisant ladite demande d'accès et lesdites informations de clés associées à ladite au moins une association de sécurité de protocole IPSec, et l'envoi de la réponse au second serveur mandataire de protocole SIP ; et
l'authentification de la réponse au niveau du second serveur mandataire de protocole SIP, en utilisant ladite au moins une association de sécurité de protocole IPSec reçue au niveau du second serveur mandataire de protocole SIP à partir du premier serveur mandataire de protocole SIP.

2. Procédé selon la revendication 1, dans lequel ladite procédure d'authentification complète est une procédure d'authentification et concordance de clés de sous-système multimédia IP, AKA IMS.

3. Procédé selon la revendication 1 ou 2, dans lequel lesdits premier et second serveurs mandataires de protocole SIP sont des contrôleurs de session ou des fonctions de commande de session d'appel de serveur mandataire d'un sous-système multimédia IP.

4. Procédé selon l'une quelconque des revendications 1 à 3, dans lequel une nouvelle association de sécurité est établie en réaffectant les paramètres de sécurité de ladite au moins une association de sécurité de protocole IPSec à l'adresse IP du second serveur mandataire de protocole SIP.

5. Procédé selon la revendication 4, dans lequel ladite au moins une association de sécurité de protocole IPSec est obtenue par le second serveur mandataire de protocole SIP à partir du premier serveur mandataire de protocole SIP.

6. Procédé selon la revendication 5, dans lequel le second serveur mandataire de protocole SIP envoie, au premier serveur mandataire de protocole SIP, une demande pour ladite au moins une association de sécurité de protocole IPSec.

7. Procédé selon l'une quelconque des revendications 1 à 6, dans lequel le second serveur mandataire de protocole SIP obtient l'identité du premier serveur mandataire de protocole SIP à partir du terminal utilisateur, par l'intermédiaire d'une signalisation de niveau de protocole SIP.

8. Procédé selon l'une quelconque des revendications 1 à 6, dans lequel le second serveur mandataire de protocole SIP obtient l'identité du premier serveur mandataire de protocole SIP à partir d'un noeud central.

9. Procédé selon la revendication 5, dans lequel un noeud central invite le premier serveur mandataire de protocole SIP à envoyer ladite au moins une association de sécurité de protocole IPsec au second serveur mandataire de protocole SIP.

10. Procédé selon l'une quelconque des revendications précédentes, dans lequel, lorsque le second serveur mandataire de protocole SIP reçoit une demande d'enregistrement provenant du terminal utilisateur, celle-ci amène le second serveur mandataire de protocole SIP à initier une procédure d'authentification de tâche et de réponse avec le terminal utilisateur, sur la base d'informations de clés de ladite au moins une association de sécurité de protocole IPsec et, à condition que le terminal utilisateur soit authentifié, une nouvelle association de sécurité est établie et utilisée.

11. Dispositif destiné à mettre en oeuvre un serveur mandataire de protocole SIP et comprenant un moyen pour établir au moins une association de sécurité de protocole IPsec en vue de sécuriser des communications entre le serveur mandataire de protocole SIP et un terminal utilisateur au cours d'une procédure d'authentification complète entre le serveur mandataire de protocole SIP et le terminal utilisateur, en vue de générer ladite au moins une association de sécurité de protocole IPsec,
**caractérisé par** :
un moyen pour mettre en oeuvre, en réponse à un transfert intercellulaire du terminal utilisateur, d'un premier serveur mandataire de protocole SIP au serveur mandataire de protocole SIP, une réauthentification locale du terminal utilisateur en utilisant des informations de clés associées à ladite au moins une association de sécurité de protocole IPsec, dans lequel le moyen pour mettre en oeuvre la réauthentification locale est configuré de manière à :
générer une tâche au niveau du serveur mandataire de protocole SIP et envoyer celle-ci au terminal utilisateur ;
recevoir une réponse en provenance du terminal utilisateur, dans laquelle la réponse est générée au niveau du terminal utilisateur en utilisant ladite tâche et lesdites informations de clés ; et
authentifier la réponse au niveau du serveur mandataire de protocole SIP en utilisant ladite au moins une association de sécurité de protocole IPsec reçue au niveau du serveur mandataire de protocole SIP à partir du premier serveur mandataire de protocole SIP.

12. Terminal utilisateur agencé, en cours d'utilisation, de manière à communiquer avec un second serveur mandataire de protocole SIP, et comprenant :
un moyen pour mettre en oeuvre une procédure d'authentification complète avec un premier serveur mandataire de protocole SIP, en vue de générer au moins une association de sécurité de protocole IPSec entre le terminal utilisateur et le premier serveur mandataire de protocole SIP, cette procédure impliquant un échange de signalisation entre le terminal utilisateur et un réseau domestique du terminal utilisateur,
**caractérisé par** :
un moyen pour établir ladite au moins une association de sécurité de protocole IPSec avec le second serveur mandataire de protocole SIP, en utilisant des informations de clés associées à ladite au moins une association de sécurité de protocole IPSec, en réponse à un transfert intercellulaire du terminal utilisateur, du premier serveur mandataire de protocole SIP au second serveur mandataire de protocole SIP, le moyen d'établissement comprenant en outre :
un moyen pour générer une réponse au niveau du terminal utilisateur, en utilisant une tâche générée au niveau du second serveur mandataire de protocole SIP, et laquelle a été envoyée au terminal utilisateur à partir du second serveur mandataire de protocole SIP, et lesdites informations de clés associées à ladite au moins une association de sécurité de protocole IPSec ; et
un moyen pour envoyer la réponse au second serveur mandataire de protocole SIP afin qu'elle soit utilisée pour l'authentification de la réponse au niveau du second serveur mandataire de protocole SIP, et pour la communication avec le second serveur mandataire de protocole SIP, en utilisant ladite au moins une association de sécurité de protocole IPSec.
